# EUROPEAN PATENT APPLICATION

(11) **EP 4 568 076 A1**
(43) Date of publication of application: **11.06.2025**
(21) Application number: 24215705.5
(22) Date of filing: 27.11.2024
(51) Int. Cl.: H02K 5/20

(54) **MOTOR COMPRISING A COOLING JACKET**

(30) Priority: 05.12.2023 JP 2023205238
(71) Applicant: TOYOTA JIDOSHA KABUSHIKI KAISHA, Aichi-ken, 471-8571 (JP)
(72) Inventor: AWATA, Hideya, Toyota-shi, 471-8571 (JP); MAKIDO, Yasuhiro, Toyota-shi, 471-8571 (JP); IMAKAWA, Takashi, Toyota-shi, 471-8571 (JP); TAKAHARA, Yoshihiro, Toyota-shi, 471-8571 (JP); ASAI, Takanori, Toyota-shi, 471-8571 (JP); OURA, Daichi, Toyota-shi, 471-8571 (JP); HARADA, Hiroyasu, Toyota-shi, 471-8571 (JP)
(74) Representative: TBK

(57) **Abstract**

A motor (2; 102) includes a cylindrical housing (20) that accommodates a stator (4) and a rotor (3) inside, a first cover (10) and a second cover (30) that block each axial opening of the housing (20). The housing (20) is provided with a refrigerant flow path (21). The upper portion and the lower portion of the first cover (10) are provided with a first hole (13, 14) each through which an inside and an outside of the refrigerant flow path (21) communicate with each other.

## Description

### BACKGROUND OF THE INVENTION

### 1. Field of the Invention

The invention relates to a motor.

### 2. Description of Related Art

A motor includes a refrigerant flow path for cooling a coil of a stator. In a motor of Japanese Unexamined Patent Application Publication No. 11-341744, a refrigerant flow path is provided in a housing for accommodating a rotor and a stator inside. The housing is provided with an air vent hole for discharging air bubbles in the refrigerant flow path. The housing may also be provided with a hole (drain hole) for draining refrigerant from the refrigerant flow path.

### SUMMARY OF THE INVENTION

Housings having different lengths are required for stators having different lengths. When an air vent hole and a drain hole are provided in each of the housings having different lengths, the structures of the housings are complicated. The present disclosure provides a motor in which the structure of a housing is simple although the motor includes an air vent hole and a drain hole.

A motor according to an aspect of the present disclosure includes a cylindrical housing that accommodates a stator and a rotor inside, and a first cover that blocks an opening of the housing. The housing is provided with a refrigerant flow path. Each of an upper portion and a lower portion of the first cover is provided with a first hole through which an inside and an outside of the refrigerant flow path communicate with each other. In the motor of the present disclosure, the first cover is provided with two first holes (an air vent hole and a drain hole). Therefore, the structure of the housing is simplified. Furthermore, a common first cover including an air vent hole and a drain hole can be applied to housings of different lengths. Since a common first cover can be applied to housings of different lengths, the degree of freedom in design of motors can be enhanced.

In the motor, one of the housing and the first cover may be provided with a second hole through which the inside and the outside of the refrigerant flow path communicate with each other.

In the motor, the second hole may be provided in the first cover.

Note that one of the two first holes (the air vent hole and the drain hole) may also serve as a refrigerant supply port. The other of the two first holes may also serve as a refrigerant discharge port. In addition to the two first holes, two second holes (a refrigerant supply port and a refrigerant discharge port) may be provided.

In the motor, the second hole may be located between the two first holes in an up-and-down direction.

A bolt that fixes a component to the first cover may block the first hole.

In the motor, the housing may have a first opening and a second opening. The first cover may block the first opening. The motor may include a second cover that blocks the second opening of the housing.

In the motor, the two first holes may be located to interpose an axial line of the housing between the two first holes.

In the motor, the first hole is smaller in diameter than the second hole.

Details and further improvements of the present disclosure are described in the following "Detailed Description of Embodiments".

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a rear view of a motor of a first embodiment;
FIG. 2 is a sectional view of the motor which is taken along a line II-II in FIG. 1;
FIG. 3 is a sectional view of the motor which is taken along a line III-III in FIG. 1; and
FIG. 4 is a sectional view of a motor of a second embodiment.

### DETAILED DESCRIPTION OF EMBODIMENTS

### First Embodiment

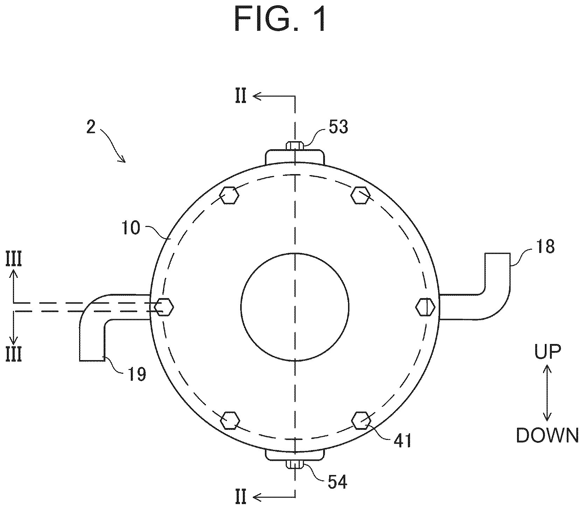

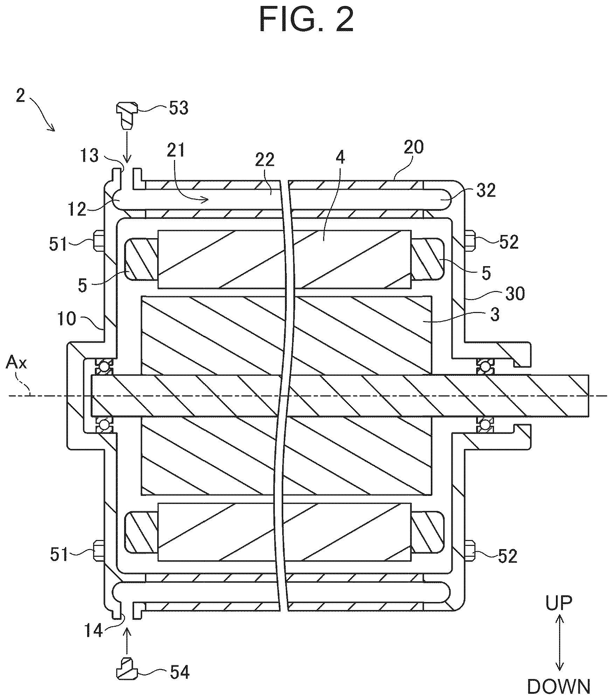

A motor 2 of a first embodiment will be described with reference to FIGS. 1 to 3. FIG. 1 is a rear view of the motor 2. FIG. 2 is a sectional view of the motor 2 which is taken along a line II-II in FIG. 1. The motor 2 includes a rotor 3, a stator 4, a housing 20, and a pair of covers 10, 30. The cover 10 corresponds to a first cover. The cover 30 corresponds to a second cover. The rotor 3 and the stator 4 are accommodated in a cylindrical housing 20. Both ends in an axial line Ax direction of the housing 20 are opened. One opening (first opening) of the housing 20 is blocked by the cover 10. The cover 10 is fixed to the housing 20 with a plurality of bolts 51. The other opening (second opening) of the housing 20 is blocked by the cover 30. The cover 30 is fixed to the housing 20 with a plurality of bolts 52. In order to distinguish the cover 10 and the cover 30 from each other, the cover 30 may be referred to as "another cover". The stator 4 is fixed inside the housing 20. The rotor 3 is rotatably supported by bearings provided in the covers 10, 30.

While the motor 2 is operating, a high-voltage current flows through a coil 5 of the stator 4, so that the coil 5 generates heat. In order to cool the coil 5, a refrigerant flow path 21 is provided in the housing 20. A liquid refrigerant flows through the refrigerant flow path 21 to cool the coil 5. More specifically, coolant flows through the refrigerant flow path 21.

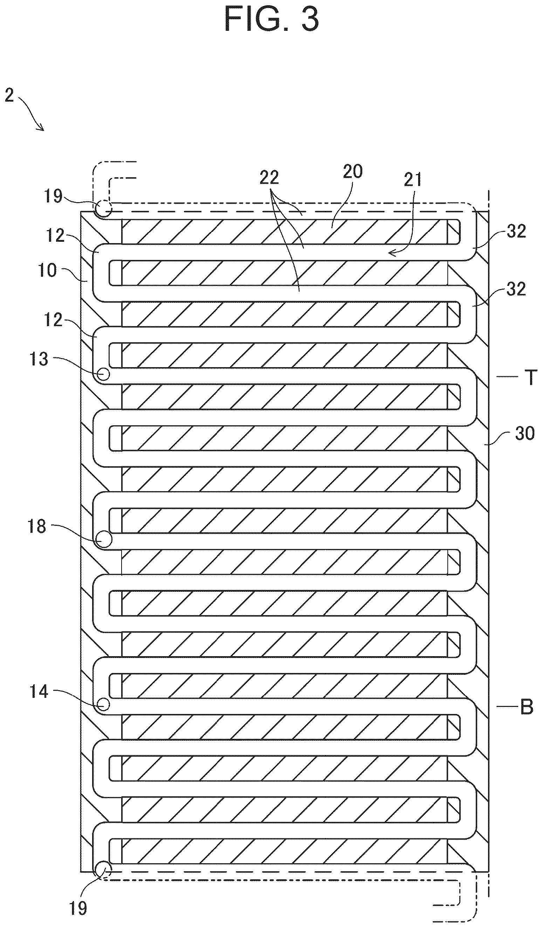

The structure of the refrigerant flow path 21 will be described. Linear flow paths 22 are provided inside the side wall of the housing 20. FIG. 3 shows a sectional view of the motor 2 which is taken along a line III-III in FIG. 1. FIG. 3 shows a section of the side wall of the housing 20 which is taken along a circumferential direction. A plurality of linear flow paths 22 parallel to the axial line Ax are provided in the side wall of the housing 20. One ends of adjacent linear flow paths 22 are connected to each other by a U-shaped flow path 12 provided in the cover 10. The other ends of the adjacent linear flow paths 22 are connected to each other by a U-shaped flow path 32 provided in the cover 30. The U-shaped flow paths 12 and the U-shaped flow paths 32 alternately connect adjacent linear flow paths 22 to each other, and the U-shaped flow paths 12, 32 and the linear flow paths 22 constitute one refrigerant flow path 21.

The cover 10 is provided with two holes (an air vent hole 13, a drain hole 14) corresponding to first holes, and two other holes (a refrigerant supply port 18, a refrigerant discharge port 19) corresponding to second holes. Totally four of the holes and the other holes all communicate with the inside and outside of the refrigerant flow path 21. A refrigerant circulating device (not shown) is connected to the refrigerant supply port 18 and the refrigerant discharge port 19. A liquid cold refrigerant is supplied from the refrigerant circulating device to the refrigerant flow path 21. The refrigerant flowing through the refrigerant flow path 21 cools the coil 5. The refrigerant that has absorbed heat from the coil 5 exits from the refrigerant discharge port 19 and returns to the refrigerant circulating device.

The air vent hole 13 is normally closed with a bolt 53. The drain hole 14 is normally closed with a bolt 54. The motor 2 is disposed such that the air vent hole 13 is located at a vertical upper portion of the cover 10 and the drain hole 14 is located at a vertical lower portion of the cover 10. In other words, the air vent hole 13 is located at an upper portion of the cover 10, and the drain hole 14 is located at a lower portion of the cover 10.

The air vent hole 13 and the drain hole 14 are opened when the motor 2 is stopped to replace the refrigerant. First, the drain hole 14 is opened to drain old refrigerant from the refrigerant flow path 21. The drain hole 14 is closed with the bolt 54, and the air vent hole 13 is opened. Refrigerant is injected into the refrigerant flow path 21 through the air vent hole 13. At the same time when the refrigerant fills the refrigerant flow path 21, air in the refrigerant flow path 21 is discharged to the outside through the air vent hole 13. At this time, air bubbles contained in the refrigerant are also discharged from the air vent hole 13. When the air vent hole 13 is closed with the bolt 53, the motor 2 is ready to be driven.

In FIG. 3, a symbol T indicates the position of the vertical upper portion of the motor 2, and a symbol B indicates the position of the vertical lower portion of the motor 2. FIG. 3 also shows that the air vent hole 13 is located at the vertical upper portion of the cover 10, and the drain hole 14 is located at the vertical lower portion of the cover 10. The refrigerant supply port 18 and the refrigerant discharge port 19 are located between the air vent hole 13 and the drain hole 14 in a vertical direction.

### Second embodiment

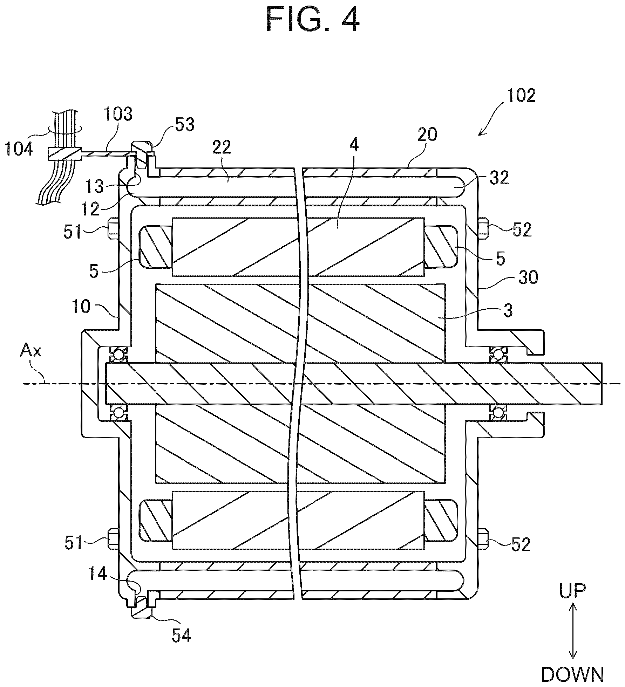

FIG. 4 shows a sectional view of a motor 102 of a second embodiment. FIG. 4 is a diagram corresponding to FIG. 2. In the motor 102, a bolt 53 for closing an air vent hole 13 fixes a cable bracket 103 to a cover 10. The cable bracket 103 supports a power cable 104 for supplying three-phase AC current to a coil 5 of a stator 4. The structure of the motor 102 is the same as that of the motor 2 except that the cable bracket 103 is provided.

Some features and effects of the motors 2, 102 described in the embodiment are listed below. The air vent hole 13 is provided at the upper portion in the vertical direction of the cover 10, and the drain hole 14 is provided at the lower portion in the vertical direction thereof. In other words, the air vent hole 13 and the drain hole 14 are located to interpose the axial line Ax therebetween. The cover 10 is provided with other holes (the refrigerant supply port 18 and the refrigerant discharge port 19) through which the inside and outside of the refrigerant flow path 21 communicated with each other, as well as the air vent hole 13 and the drain hole 14. The diameters of the air vent hole 13 and the drain hole 14 are smaller than the diameters of the refrigerant supply port 18 and the refrigerant discharge port 19. The two holes (the air vent hole 13, the drain hole 14) and the two other holes (the refrigerant supply port 18, the refrigerant discharge port 19) all cause the inside and outside of the refrigerant flow path 21 to communicate with each other. The other holes (the refrigerant supply port 18 and the refrigerant discharge port 19) are located between the air vent hole 13 and the drain hole 14 in an up-and-down direction (vertical direction).

No hole is provided in the cylindrical housings 20 of the motors 2, 102. This simplifies the structure of the housing 20. Different housings 20 are prepared according to the length of the stator 4. A common cover 10 can be adopted for the housings 20 having different lengths. Since the cover 10 can be made common for the housings 20 having different lengths, the degree of freedom of design can be enhanced for the motors 2, 102.

The two holes (the air vent hole 13, the drain hole 14) and the two other holes (the refrigerant supply port 18, the refrigerant discharge port 19) are provided in the cover 10, so that the degree of freedom in selecting the locations of the refrigerant supply port 18 and the refrigerant discharge port 19 is enhanced.

In the motor 102 of the second embodiment, the bolt 53 for securing the motor component (the cable bracket 103) to the cover 10 blocks the air vent hole 13. The bolt 53 that blocks the air vent hole 13 also serves as a bolt for fixing the component. This structure contributes to reduction in the number of components in the motor 102.

Points to be noted for the technique described in the embodiment will be described below. The drain hole 14 may also serve as the refrigerant supply port 18, and the air vent hole 13 may also serve as the refrigerant discharge port 19. In other words, only two holes may be provided in the cover 10. In this case, both the holes are not closed. The refrigerant enters the refrigerant flow path 21 from the refrigerant supply port 18 (drain hole 14) at the lower portion, and emits from the refrigerant discharge port 19 (air vent hole 13) at the upper portion. Air bubbles contained in the refrigerant are carried along with the flow of the refrigerant and naturally emit from the refrigerant discharge port 19 (air vent hole 13).

One of the air vent hole 13 and the drain hole 14 may also serve as the refrigerant supply port 18. One of the air vent hole 13 and the drain hole 14 may also serve as the refrigerant discharge port 19.

The refrigerant supply port 18 and the refrigerant discharge port 19 may be provided in the other cover 30 or the housing 20. However, it is desirable that the refrigerant supply port 18 and the refrigerant discharge port 19 are provided in the cover 10 together with the air vent hole 13 and the drain hole 14. By providing four holes in one cover 10, the structures of the housing 20 and the other cover 30 can be simplified.

The cover 10 blocks one opening of the cylindrical housing 20. The other opening of the housing 20 is blocked by the other cover 30. The housing 20 may have a cylindrical shape having a bottom. In that case, the motor has only one cover 10. The motors 2, 102 of the embodiment have a refrigerant flow path 21 including a plurality of linear flow paths 22 and a plurality of U-shaped flow paths 12, 32. The refrigerant flow path 21 may have any shape as long as it is provided inside the wall of the housing 20.

The bolt 54 that blocks the drain hole 14 may fix the component of the motor. The bolts 53, 54 may fix components other than the cable bracket 103 to the cover 30.

Although the specific examples of the present disclosure have been described above in detail, these are merely examples, and do not limit the scope of the claims. The technique described in the claims includes various modifications and changes which will be made in the specific examples illustrated above. The technical elements described in the present specification or drawings exhibit technical utility alone or in various combinations, and are not limited to the combinations described in the claims at the time of filing. Furthermore, the technique illustrated in the present specification or drawings can achieve a plurality of objects simultaneously, and has technical utility by achieving one of the objects itself.

## Claims

1. A motor (2; 102) comprising:
a cylindrical housing (20) that accommodates a stator (4) and a rotor (3) inside; and
a first cover (10) that blocks an opening of the housing (20),
wherein the housing (20) is provided with a refrigerant flow path (21), and
wherein each of an upper portion and a lower portion of the first cover (10) is provided with a first hole (13, 14) through which an inside and an outside of the refrigerant flow path (21) communicate with each other.

2. The motor (2; 102) according to claim 1, wherein one of the housing (20) and the first cover (10) is provided with a second hole (18, 19) through which the inside and the outside of the refrigerant flow path (21) communicate with each other.

3. The motor (2; 102) according to claim 2, wherein the second hole (18, 19) is provided in the first cover (10).

4. The motor (2; 102) according to claim 3, wherein the second hole (18, 19) is located between the two first holes (13, 14) in an up-and-down direction.

5. The motor (2; 102) according to claim 1, wherein a bolt (53, 54) that fixes a component to the first cover (10) blocks the first hole (13, 14).

6. The motor (2; 102) according to claim 1,
wherein the housing (20) has a first opening and a second opening,
wherein the first cover (10) blocks the first opening, and
wherein the motor includes a second cover (30) that blocks the second opening of the housing (20).

7. The motor (2; 102) according to claim 1, wherein the two first holes (13, 14) are located to interpose an axial line (Ax) of the housing (20) between the two first holes (13, 14).

8. The motor (2; 102) according to claim 2, wherein the first hole (13, 14) is smaller in diameter than the second hole (18, 19).
